# EUROPEAN PATENT APPLICATION

(11) **EP 1 616 478 A1**
(43) Date of publication of application: **18.01.2006**
(21) Application number: 05254370.9
(22) Date of filing: 12.07.2005
(51) Int. Cl.: A01F 25/13

(54) **Apparatus and method for preserving material**

(30) Priority: 13.07.2004 GB 0415602
(71) Applicant: Evans, Timothy David, Ashtead Surrey KT21 1EU (GB)
(72) Inventor: Evans, Timothy David, Ashtead Surrey KT21 1EU (GB)
(74) Representative: Lucas, Brian Ronald

(57) **Abstract**

Dewatered sludge or other biomaterials stored in the open in stockpiles may be protected using storage and dispensing apparatus comprising a roller and flexible sheet material providing a cover coiled onto the roller. Inclusion of integral ballast can prevent movement of the cover by wind. The roller comprises an inflatable chamber of flexible relatively inextensible material that when deflated permits said roller and said sheet material to be compacted lengthwise of said roller and when extended and inflated assumes a round profile permitting said coiled material to be dispensed by rolling over the stockpile. The above apparatus reduces or overcomes the problems created by excess rainfall e.g. slumping and run-off.

## Description

### FIELD OF THE INVENTION

This invention relates to an apparatus and method for protecting or preserving a stockpile of moisture-sensitive material that may be left in the open air for extended periods.

### BACKGROUND TO THE INVENTION

Treatment of wastewater sludge (biosolids) to permit reuse is well known. One such method involves alkali treatment to increase the pH of the sludge to 12 or above e.g. by addition of lime. If the sludge is also subjected to temperatures of 70°C or above for at least 30 minutes, the result is a complete disinfection commonly referred to as pasteurization resulting in the destruction of pathogens and indicator organisms and making the sludge suitable for plant nutrient supplementation and soil remediation without a site specific application permit. The US Environmental Protection Agency recognizes this type of process as a process that further reduces pathogens (PFRP) and allows unrestricted contact with biosolids so treated. Anaerobic digestion is the most frequent method of sludge treatment, it reduces but does not eliminate pathogens, reduces odor and produces methane-rich biogas that can be used as fuel. The US Environmental Protection Agency recognizes this type of process as a process that significantly reduces pathogens (PSRP). Use of PSRP and PFRP biosolids on land is encouraged in the USA and the EU with restrictions on types of crops and intervals to harvest in the case of PSRP.

Production of sludge by a wastewater treatment works or the like is a continuous process, whereas removal to an application site and use at that site may be intermittent processes. Therefore the sludge has to be stored in so-called "stockpiles" both at production facilities and at application sites where the stockpiled dewatered sludge may need to be applied within a limited time window. The producer, customer and public all benefit from being able to employ good delivery drivers and phase deliveries throughout the year. Site owners appreciate seeing the biomaterial on site (and ready for application) so that they know that application can be guaranteed.

Many people have experienced the difficulty of maintaining stockpiles of dewatered biosolids, composted materials and other biomaterials in a satisfactory condition on application sites or even at production facilities. Excessive rainfall causes the difficulty. Stockpiles are liable to slump during prolonged wet weather or to release runoff.

Slumping stockpiles occupy increasing areas of land, they are difficult to contain and, when it comes time to spread the stockpiled material, precision application is more difficult. It is not a matter of getting the biomaterial dry enough; even digested biosolids that had been dewatered to 25% DS have slumped during wet winters. Once a stockpile starts to move it is extremely difficult to contain. The side pressures are immense. Building a wall with large straw bales, perhaps secured by stakes, can be successful, but it is expensive in labor and materials and then there is the problem of what to do with the rotting bales at the end of the job. Structure and strength can be imparted to dewatered biosolids by mixing in straw but the additional cost is estimated at about £5 per tonne of cake. The straw amended cake is more bulky to transport and more difficult to apply evenly. Finally it can be difficult to find clean straw that is free from seeds of pernicious arable weeds, for example herbicide-resistant blackgrass

Run-off can be a water pollution risk, and there is also a risk that it will flow into, and damage, property. Lime stabilized dewatered biosolids do not slump but liquor has percolated into field drains and thence to surface water. When stockpiles of composted materials become saturated with water, oxygen is excluded and the resulting anaerobic conditions can produce compounds that are malodorous and/or phytotoxic.

There are legal requirements that up to now have not been fully enforced because of the practicalities; stockpiles are permitted provided they are contained and safe. It is difficult to argue that uncovered and unfenced stockpiles comply fully with either of these requirements, especially if a stockpile has moved.

Silage is another biological material that is stored in significant amounts on farms and requires protection from the elements. A silage clamp or pit is the storage option of choice for most commercial farms in mainland Europe. The main benefit of this system is a reduced cost per tonne of feed due to the economy of scale of the bulk storage system. The filled and compacted clamp must be covered to allow interactions among the forage, microbial populations and the ensiling environment. Furthermore liquid from silage is objectionable owing to its high biological oxygen demand (BOD)

An early example of a cover for silage stored in a silo is disclosed in US-A-1429624 (Perkins) and is based on overlapping panels. US 6610377 (Gianfranco) discloses a single- or multilayer plastic sheeting for covering products, particularly ensiled agricultural products, or similar, like chopped silage in which fermentation is limited to a lactic fermentation caused by anaerobic microorganisms. The cover sheeting or at least one layer of said sheet is made of an insulating plastic airtight material, for example ethyl vinyl alcohol (EVOH), polyvinyl alcohol (PVOH), polyvinylidene chloride (PVAL), EVAL, and combinations thereof.

US-A-6363661 (Myers) discloses a cover for protecting a mound of silage or other particulate material in outside storage from the effects of weather elements, said cover comprising:
a flexible canvas having a top layer connected to a bottom layer along respective side edges thereof;
a plurality of individual bladders disposed between said top and bottom layers of said canvas in a spaced apart configuration, each bladder being coupled to an adjacent bladder with a flexible conduit for fluid communication therewith; and
means including a check valve for selectively filling said plurality of bladders with water, so that said canvas can be maintained upon the mound by the weight of said bladders when filled with water. The cover may include a canvas of generally rectangular configuration adapted to cover a mound of fodder silage and the bladders are spaced apart along the edges and are directed at right angles to them.

US-A- 20030172597 (Folkema) discloses a bunker sealing system for use with a horizontal style bunker. It includes a cover for selectively covering and sealing silage, said cover having liquid fillable bladders for holding the cover in place over the silage and assisting in settling and compacting. Cover handling equipment is provided, which includes a spool for spooling and unspooling the cover, and a cover carriage for supporting the spool and provided with wheels cooperatively rolling along top rails mounted on top of bunker walls, so that the carriage spans between two bunker walls and is rollably moveable along the walls.

The Myers and Folkema disclosures are atypical of current farming practice, and the usual way of protecting silage on farms is by means of a heavy-duty polyethylene sheet weighted around its periphery and across its surface by used automobile tires or sandbags. This method of storage of silage is not entirely satisfactory since it is difficult to make an airtight and water-tight peripheral seal and a significant proportion of the silage may be rendered unusable.

### SUMMARY OF THE INVENTION

The present invention provides *inter alia* a solution to the problem of how to exclude excessive rainfall from a stockpile of biological material that is liable to be left in the open for extended periods, and to do so in a practical and affordable manner that can also reduce or eliminate odor.

The present invention provides, in one aspect, storage and dispensing apparatus comprising a roller and flexible sheet material coiled onto the roller, wherein the roller comprises an inflatable chamber of flexible relatively inextensible material that when deflated permits said roller and said sheet material to be compacted lengthwise of said roller and when uncompacted and inflated assumes a round profile permitting said coiled material to be dispensed by rolling over an article to be covered.

The use of inflatable rollers in a boat launching trolley is disclosed in US-A-3742534. An inflatable tube within a pressure-retaining cover for use as a structural element is disclosed in US-A-5167023 and the use of "air-beams" within an inflatable structure to control the shape of that structure is disclosed in US-A-3705429. Applicant's information and belief is that an inflatable roller or beam has not previously been used for the storage and dispensing of sheet material wound thereon.

The invention further provides a method of protecting or preserving a stockpile of moisture-sensitive material in the open, which comprises disposing flexible sheet material over said moisture sensitive material using the apparatus described above.

The invention yet further provides a method of storing a stockpile of moisture-sensitive material in the open, which comprises disposing flexible sheet material over said moisture sensitive material using the apparatus described above, and recovering the moisture-sensitive material after a storage period.

In an additional aspect the invention provides a cover of sheet material for covering piled material to be stored in the open, said cover having a periphery along which are formed one or more chambers directed parallel to and formed along edges of the cover and adapted to receive and retain water for weighting the periphery of the cover. This water ballast prevents water from running back under the cover and prevents wind from lifting and disturbing the cover.

The above cover may be at least a 3-ply laminate having first and second film layers laminated to a woven or non-woven reinforcing layer. The film layers nay be of polyethylene. The cover may be formed with one or more vent apertures each covered with a flap for resisting water ingress. The tubular chambers may be of diameter about 10 to about 20 cm. The cover is advantageously of breathable material.

### BRIEF DESCRIPTION OF THE DRAWINGS

Various embodiments of the invention will now be described, by way of example only with reference to the accompanying drawings, in which:
Fig. 1 is a perspective view of a stockpile with a first embodiment of a stockpile cover according to the invention on a transport pallet;
Fig. 2 is a view as Fig 1, but with the roller and sheet material pulled out across the width of the stockpile (the transport pallet remaining attached to the cover);
Fig. 3 is a view with the roller inflated and ready to traverse the stockpile;
Fig 4 is a view with the roller and sheet material further across the stockpile;
Fig 5 is a view with the sheet material fully deployed across the stockpile with the roller still inflated;
Fig 6 is a similar view with the roller deflated and ballast pipes along the edges of the sheet material filled with water to seal the cover to the ground;
Fig. 7 shows the sheet material and roller during removal of the apparatus, with the sheet material coiled onto the roller and supported thereby immediately prior to removal from the stockpile;
Fig. 8 shows the apparatus packed on the transport pallet ready for transport or storage, the roller having been deflated and the cover rolled onto the pallet;
Fig. 9 shows a stockpile cover and wrapper for the stockpile cover according to a second embodiment of the invention;
Fig. 10 is a view of the stockpile cover and wrapper of Fig. 9 adjacent a stockpile with the wrapper opened and the cover ready for deployment;
Fig. 11 is a view of a stockpile and of the cover and wrapper of Figs 9 and 10 with the roller inflated and ready to traverse the stockpile;
Fig 12 is a view similar to Fig. 11 but with the roller and sheet material partway across the stockpile;
Fig 13 is a view similar to Fig 11 but with the sheet material fully deployed across the stockpile and with the roller deflated; and
Fig. 14 is an end view of the roller ready for deflation and showing an air bleed pipe.

### DETAILED DESCRIPTION OF PREFERRED EMBODIMENT

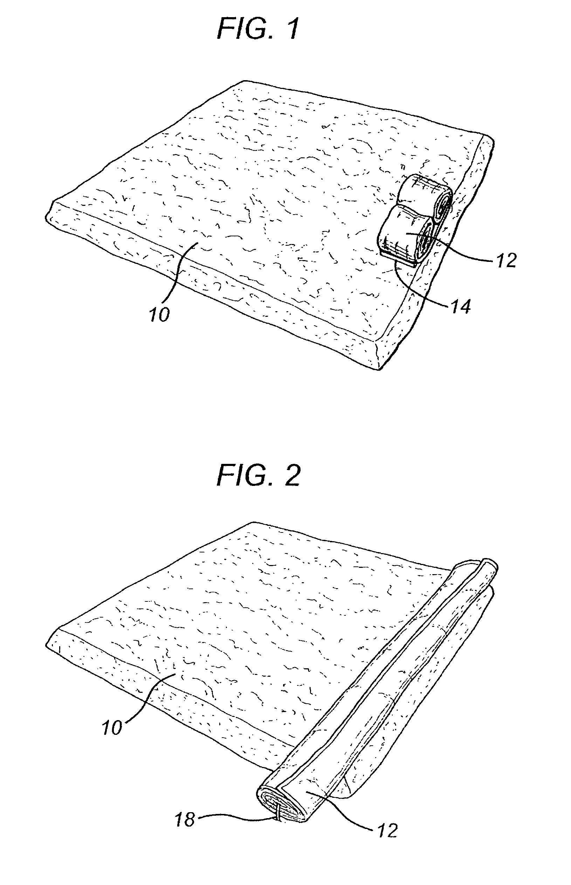

Fig. 1 shows a stockpile 10 of biosolids in an open space such as agricultural land and typically having dimensions of about 25 metres x 25 metres x 2 metres height. One class of material to be protected that presents a particular problem is stockpiled dewatered digested sludge e.g. of solids content about 20-25 wt%. A stockpile of dewatered digested sludge is typically delivered and created in about 2-3 working days, and it may be necessary for it to be stored without unacceptable deterioration or other detriment for some months and usually during late-autumn, winter or spring periods. Other possible biosolids or biomaterials that may be protected according to the invention include silage and manure. In general any material that needs to be stored in open air in the form of a stack or stockpile can be protected using the invention e.g. grain or other flowable materials.

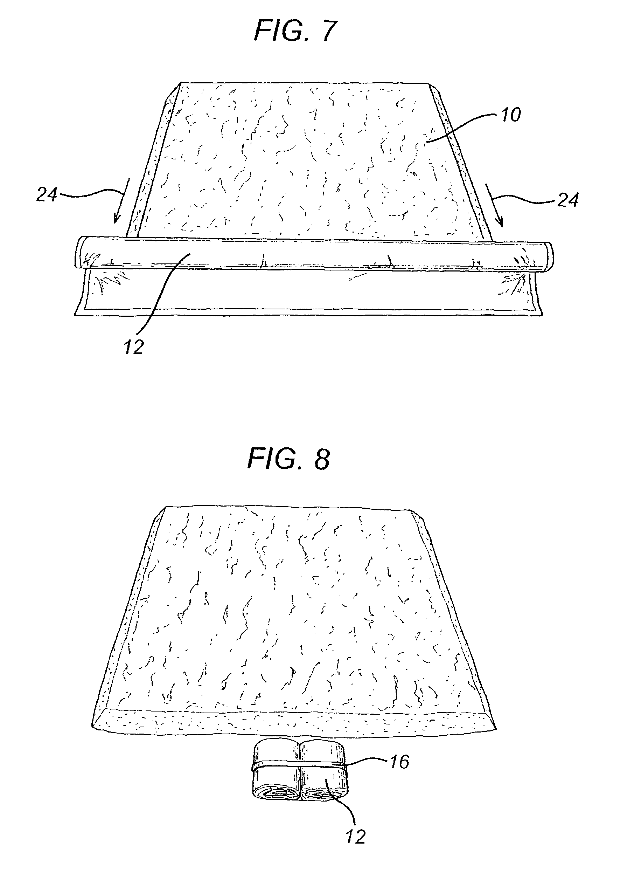

A stockpile cover 12 shown in a rolled-up state on a transport pallet 14 is shown standing on the stockpile adjacent an edge thereof. The stockpile cover on its pallet may be placed at the edge of the stockpile during, or at the end of, constructing the stockpile. There is a covered vent (not shown) above the pallet. As will be seen, the cover when deployed is rectangular with an area slightly greater than the stockpile, but in its fully rolled-up state has been first rolled up from one side towards the other and then coiled from each end towards the centre. The weight of a typical cover 12 for a 25m x 25m stockpile is about ¼ tonne, and it is conveniently provided on an integral transport pallet 14, which in this instance is a double width wooden, metal or plastics pallet i.e. 800 by 2400 mm so that the cover and pallet may be loaded onto or removed from a delivery vehicle by means of a fork lift truck. The cover may be secured to the pallet by a strap 16 (Fig. 8) or straps.

Fig. 2 shows the stockpile and cover at the end of a first stage of deployment in which the cover 12 has been uncoiled and lies along one edge of the stockpile. The flexible material or cover 12 and the roller on which it is coiled can be pulled out to the edges of the stockpile using straps. An inflation tube 18 for the roller on which the cover 12 is stored in a rolled-up state appears at one end of the coiled cover. The roller or airbeam (which in this instance is detachable for re-use) is then inflated using an air compressor so that it becomes a sufficiently rigid cylinder.

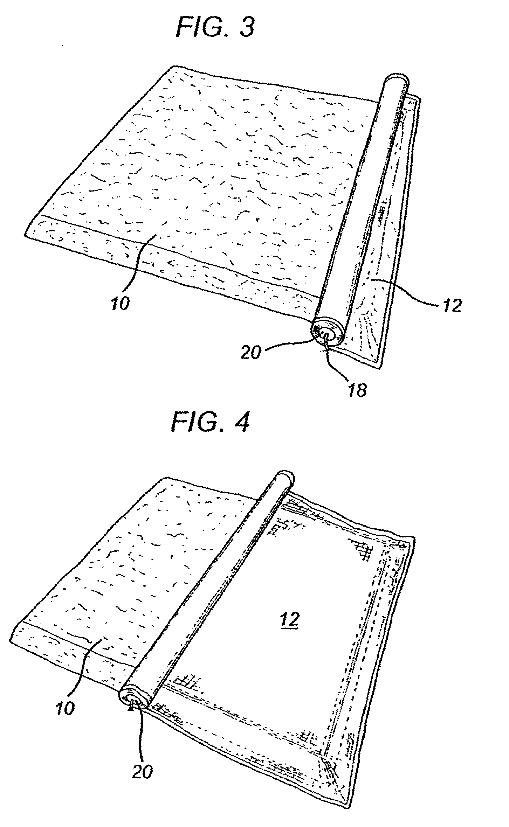

Fig. 3 shows the beginning of a second stage of deployment in which the roller or airbeam 20 on which the cover 12 is coiled has been inflated via tube 18 using an air compressor, and the roller 20 and cover 12 are starting to traverse the stockpile 10 to deploy the cover. The inflated roller or airbeam has low rolling resistance because of its large diameter. This (together with its light weight) means that it can be rolled across the stockpile easily so as to dispense the sheet material that it carries. Rolling means that the cover will not be smeared with the material in the stockpile and that it should not be ripped if the stockpile should contain sharps. Surprisingly even though the stockpile is too soft to be walked on, after the cover has applied people can walk over it, so that e.g. people can walk behind the cover and push the roller over the stockpile

The roller 20, which is of air-impermeable difficultly extensible sheet, typically has a length of about 10 to about 40 m, and in this instance about 25m. When inflated it typically has a diameter of 30 to 200 cm, more usually 50 to 120 cm and in this instance about 80 cm. If the diameter is too small, the roller 20 and cover 12 will not be easy to roll onto and over the stockpile 10 and will not pass freely over obstructions, whereas if it is too large it will be difficult to manage. The size of the roller should not be greater than necessary since the material for the roller will often be relatively expensive. Normal inflation pressures for the roller 20 will be those readily achievable with a leaf blower or the like portable air compressor, e.g. about 0.03 bar (30 cm of water gauge or above) and typically from about 0.01 to 0.5 bar a. Under surprisingly low pressures e.g. in some instances 10 millibar or less the roller 20 becomes sufficiently rigid to support the protective sheet material coiled onto it and to permit the sheet material to be rolled over the stockpile.

The inflatable chamber of the roller 20 may be formed of flexible substantially inextensible plastics material. Such materials are well known for tubular structures of inflatable boats, and for example Avon Inflatables Limited uses a fabric called "Hypalon" in which gas-impermeable material is impregnated by calendaring onto both sides of a nylon weave core material. We prefer to use less expensive materials for the roller, and, for example, polypropylene or polyethylene terephthalate should resist the required pressures at a thickness of e.g. 50 to 500 gsm. Altematively the roller 20 may be formed of an intensible outer cover together with an inflatable inner tube of natural or synthetic rubber or other air-impermeable material. The inflation chamber will normally be provided with a 15 cm screw cap that may be opened for admission of air into the roller and then closed. The roller 20 may be permanently attached to the flexible sheet material of the cover 12,t or they may be formed as a separate detachable components.

The cover 12 of flexible sheet material coiled onto the above mentioned roller and dispensed therefrom may be square or rectangular and may be manufactured in a range of standard sizes, for example 10m by 10m, 15 m by 15 m, 20m by 20 m, 30 m by 30 m or in this instance 25m by 25 m, which assuming a stacking height of 2 m would suffice to cover a stockpile of volume 1250 m³. The flexible sheet material may be a water-impermeable textile material, and it may be is vapor-permeable. It may e.g. be based on LDPE with a woven or non-woven reinforcement of HDPE. The cover is are preferably fabric-reinforced and somewhat tarpaulin-like, being made from reinforced plastics sheeting e.g. in a 3-ply laminate by weaving high density polyethylene ribbon to form a scrim, and coating the scrim on both faces with polyethylene which is preferably pigmented for UV light protection; an olive green coloring agent is sympathetic to landscape. Other such reinforced sheeting may take the form of a 5-ply laminate comprising three layers of polyethylene and two layers of polyethylene or cord scrim or grid. The reinforcement need not be a woven textile material and e.g. thin needled or spunbonded felts or other nonwoven materials may be used. Other cover sheets may be a blown monolayer or a 3-layer coextruded film based on LDPE or LLDPE. Further sheets may be made e.g. of other polyolefins e.g. polypropylene, or of polyethylene terephthalate, polyvinyl chloride, polyvinylidene chloride or natural or synthetic rubber e.g. butyl rubber with or without a woven or nonwoven fibrous reinforcement. They may have a weight per unit area of typically about 150-500 gsm, e.g. 200-400 gsm. A suitable such cover has been made from a high performance HDPE/LDPE laminate geotextile using HF welding and has an expected life of at least 5 years. It has been found that if the cover 12 is both liquid and vapour-impermeable, there is a risk of condensation and consequent growth of microorgnaisms on the stockpile during storage. For that reason the cover 12 is preferably of a microporous or breathable material that is vapour permeable and liquid impermeable. Lows of Dundee Ltd of Dundee, UK provide a woven and coated microporous polyethylene tarpaulin PE 14/50 of weight 200 g/m² that has suitable properties of vapour permeability and liquid impenneability. The material to form the cover may be provided by the fabric supplier in the form of strip, in which the cover may be made by welding together strips of the appropriate width and forming along its edges integral ballast tubes as described below.

The cover sheet 12 may additionally or alternatively be provided with one or more vents to prevent accumulation of methane or other gas which may form by continuing anaerobic digestion and which could in use cause the cover to balloon up. For that purpose the cover is formed with one or more apertures each covered with a simple welded-on flap to reduce water and/or air ingress.

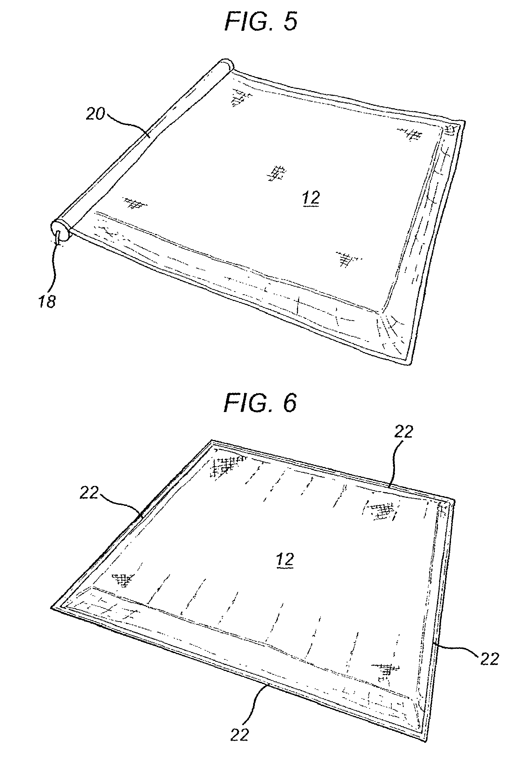

Fig 4 shows the airbeam 20 which has traversed partway across the stockpile 10, and Fig 5 shows completion of the traverse, with the airbeam 20 still attached. The airbeam 20 is then deflated and may be removed if so desired (Fig. 6) and water is pumped into integral ballast tubes 22 around the edge of the cover. These hold the cover in ground contact and reduce or prevent water running off the cover and seeping under its edges. They may be of diameter 10-20 cm e.g. about 15 cm and typically exert a load of about 1.7 kg per linear meter, which has been found to be sufficient to prevent movement or rainwater ingress. The also prevent wind getting under the cover and damaging or blowing it away. The cover with water-ballast in place is surprisingly effective in following ground contours and is surprisingly resistant to lifting or movement by the wind. A preferred feature is therefore that the flexible material has at least one edge provided with a chamber for receiving water for weighing down said edge, the chamber being integral with the flexible sheet material or being detachable from the flexible sheet material.

Each ballast tube is provided with filling and drain ports to permit the tube to be filled and drained, and with a closure for closing the port after the tube has been filled. One form of filling and drainage port is a one inch (2.5 cm) threaded connector which may be closed e.g. by means of a screw-on cap. However, this is a relatively expensive solution and the ports are vulnerable to damage. A further possibility which is more practical given the large volume of water needing to be drained is to use 4" (10 cm) screw caps. A further version uses "elephant trunks" i.e. the lay-flat tube will extend beyond the width of the cover in both directions and will be open at its ends. Each end may then be closed by folding the tube back on itself, and holding it closed by applying a spring clip. That will be simple and quick for filling because there will be no restriction. The open ends will be supported to aid filling, probably using the portable triangular frames similar to those used to hold road-repair signs. To empty a tube will just be a matter of laying out the "trunks" so as to open both ends, and possibly blowing the tubes through to get the last of the water out.

When it is time to empty the stockpile, the sequence is reversed. The ballast tubes are emptied, the beam 20 again attached and inflated, and the cover 12 rolled back in the direction of arrows 24 in Fig. 7. The cover is then returned to the pallet, refastened with strap 16 or straps and removed from the stockpile as shown in Fig 8.

Stockpiles covered with the present covers more fully comply with the law; they look professional, are less prone to odor and maintain quality of the stored material. Covers are rapidly and easily spread or deployed and subsequently recovered. They can be sited on more sloping ground or closer to housing than otherwise which makes more land available. The present covers and rollers are reusable and do not add unduly to the overall cost involved in supplying and applying the stockpiled material. The breakeven compared with straw baling in one embodiment is expected to be about two uses and even in a single use the cost of using the present apparatus has been calculated to be less than that of straw incorporation.

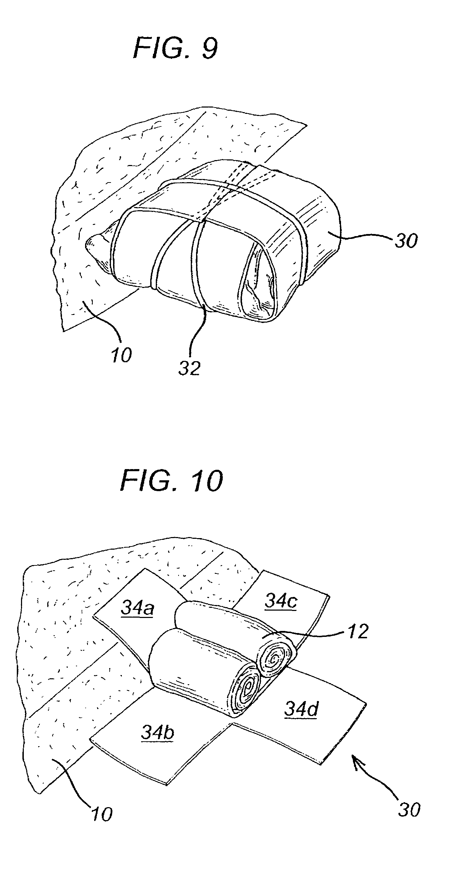

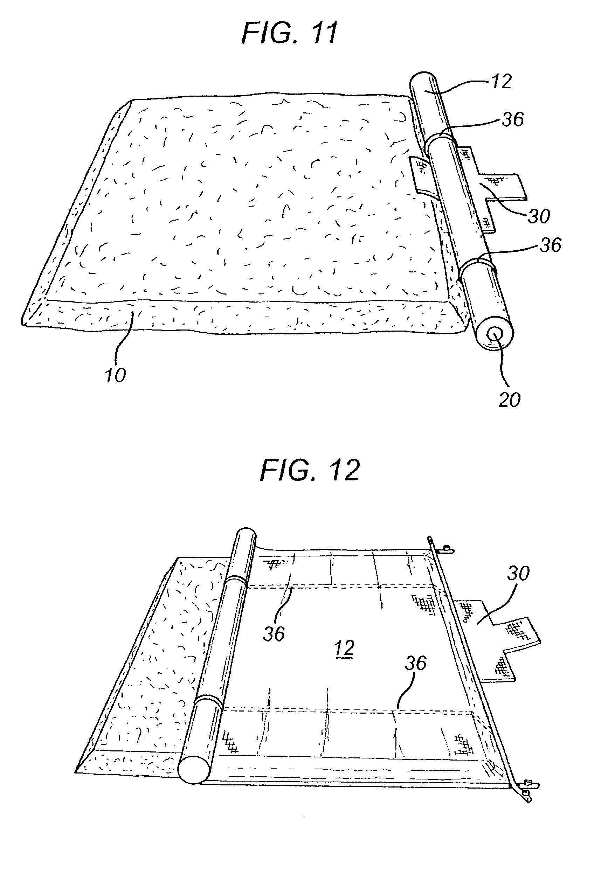

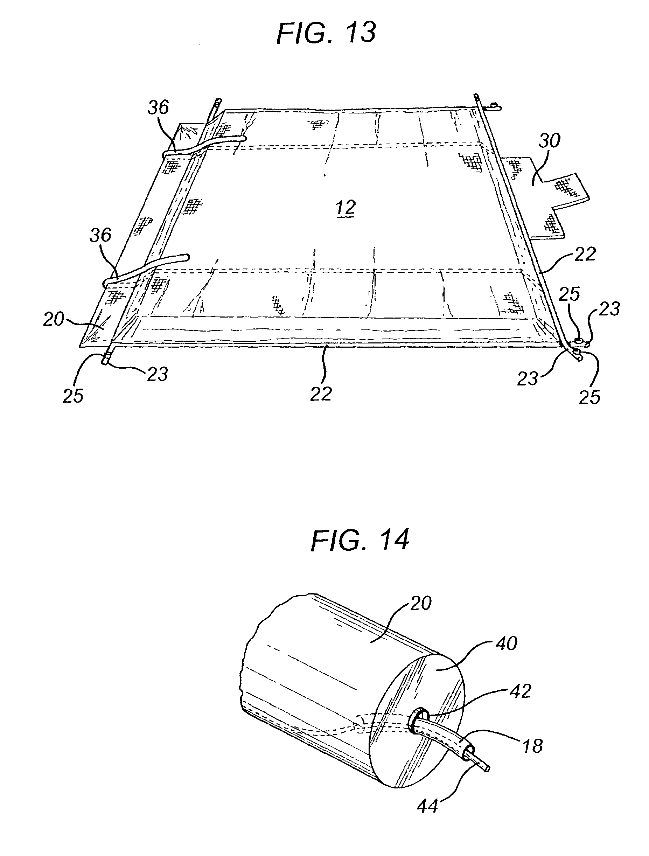

A second embodiment of the cover is shown in Figs. 9-13. Instead of the pallet 14, the cover 12 is packed in a wrapper 30 held closed by bands 32 which in this instance are ratchet straps. Removal of the bands as in Fig, 10 lays the sides 34a-34d of the wrapper out in a cruciform arrangement, with the side 34a extending up the side to the top of the stockpile 10. The cover 12 is then uncoiled and the air beam 20 is inflated while resting on the ground adjacent to the stockpile 10 rather than on top of the stockpile, which is better from a health and safety standpoint. The cover 12 and roller 20 can then be pushed up onto the stockpile 10 by users pushing the cover 12 from its side nearer to the wrapper 30, so that the users walk on the cover 12 as it deploys and are at low risk of falling onto the stockpile. They are protected to the front by the inflated airbeam, which is a 1m high barrier, and to the sides and rear because the stockpile is covered. Deployment is complete in Fig 13, where the roller 20 is deflated and lays flat on the ground. As in the previous embodiment ballast tubes 22 along the edges of the cover 12 are filled with water to hold the cover in position. To assist filling and drainage, the ballast tubes have short extensions 23 fonned with four inch (10 cm) filling and drainage apertures water-tightly closed by screw caps 25. Handgrips 36 extend across the underside of the cover 12 and appear at the edge of the cover remote from the wrapper 30. When the cover is to be removed, the roller 20 is re-inflated, and the cover can be coiled onto the roller from the side nearer the wrapper 30 by pulling on the handgrips 36, again without the users having to walk directly on the stockpile 10.

Fig 14 shows a detail of the roller 20 which has portions defining an end face 40 formed with a central threaded region 42. A filling pipe or "trunk" 18 is seen protruding through the region 42, together with a length of braided hose resembling garden hose. The hose extends the length of the roller 20, and is formed at intervals with apertures or T-pieces for inflow of air. With this arrangement, as the deflated airbeam 20 with the cover 12 rolled onto it is coiled ready for return into the wrapper 30, residual trapped air can escape through hose 44 and does not remain to interfere with the re-coiling of the airbeam and cover. When the airbeam 20 is in its inflated state for deployment or recovery of the cover, the opening through region 42 is closed by a cap that screws on to form an air-tight seal.

When covers according to the invention arc used for other materials such as silage or manure, it may not be necessary to provide or deploy a roller, but the water ballast tube or tubes extending along the periphery of the cover serve to hold the cover in place and prevent it being moved by wind. In this regard, the present cover is significantly more effective than a conventional film and tires or sandbags.

## Claims

1. Storage and dispensing apparatus comprising a roller and flexible sheet material coiled onto the roller, wherein the roller comprises an inflatable chamber of flexible relatively inextensible material that when deflated permits said roller and said sheet material to be compacted lengthwise of said roller and when uncompacted and inflated assumes a round profile permitting said coiled material to be dispensed by rolling over an article to be covered.

2. The apparatus of claim 1, wherein:
the roller has a length of about 10 to about 40 meters, when inflated has a diameter of about 30 to about 200 cm, and is constructed to withstand a pressure of 0.01 to 0.5 bar a; and
wherein said inflatable chamber further comprises an opening closed by closure or valve means for admitting air from a blower or compressor.

3. The apparatus of claim 1 or 2, wherein the flexible sheet material is of weight 100 to 500 gsm, is of a vapour-permeable water-impermeable textile material, and has at least one edge provided with a chamber for receiving water for weighing down said edge.

4. The apparatus of claim 1, 2 or 3, in a state where the chamber is deflatable and compactable lengthwise by rolling and/or folding.

5. The apparatus of claim 4, on a transport pallet or in a wrapper.

6. A method of protecting or preserving a stockpile of moisture-sensitive material in the open, which comprises disposing flexible sheet material over said moisture sensitive material using the apparatus of any of claims 1-5, and recovering the moisture-sensitive material after a storage period.

7. The method of claim 6, wherein the moisture-sensitive material comprises sludge.

8. A cover of sheet material for covering piled material to be stored in the open, said cover having a periphery along which are formed one or more chambers directed parallel to and formed along edges of the cover and adapted to receive and retain water for weighting the periphery of the cover.

9. The cover of claim 8, which is more than 10m by 10m, and optionally has tubular chambers along its periphery of diameter about 10 to about 20 cm.

10. The cover of claim 9, which is at least a 3-ply laminate having first and second film layers laminated to a woven or non-woven reinforcing layer, said the film layers optionally being of breathable material, and said cover optionally being formed with a vent aperture covered with a flap for resisting water ingress.
